# EUROPEAN PATENT SPECIFICATION

(11) **EP 1 198 093 B1**
(45) Date of publication and mention of the grant of the patent: **15.06.2005**
(21) Application number: 01124521.4
(22) Date of filing: 12.10.2001
(51) Int. Cl.: H04L 12/28

(54) **Point-to-multipoint wireless access system**
Drahtloses Punkt-zu-Mehrpunkt Zugangssystem
Système d'accès point à multipoint sans fil

(30) Priority: 13.10.2000 JP 2000314349
(43) Date of publication of application: 17.04.2002
(73) Proprietor: NEC CORPORATION, Tokyo (JP)
(72) Inventor: Morikawa, Yutaka, Tokyo (JP)
(74) Representative: Betten & Resch

(56) References cited:
- EP-A- 0 999 717
- GB-A- 2 330 729

## Description

### BACKGROUND OF THE INVENTION

### (a) Field of the Invention

The present invention relates to a point-to-multipoint wireless access system and, more particularly, to a point-to-multipoint wireless access system using two different frequency bands for an up-link channel and a down-link channel.

### (b) Description of the Related Art

A wireless (radio) communication system is proposed in which a series of narrow-band and wide-band services are offered to an end user based on the request therefrom. Patent Publication JP-A-8(1996)-280058 corresponding to a priority number 94 361355 in USA describes such a wireless communication system, wherein the spectrum allocation is re-allocated in a specified frequency band for variable or optimum use thereof in order to utilize the system more positively.

Although allocation of different frequency bands to an upstream channel (up-link channel) and a downstream channel (down-link channel) is also described in the above publication, the proposed system is such that the different frequency bands thus allocated reside within a single licensed frequency band for the system. Thus, in the proposed system, it is necessary that the licensed frequency band for a cellular phone system be divided to thereby allocate the divided frequency bands to respective up-link channel and down-link channel. Thus, if the up-link channel and the down-link channel require wide frequency bands, it is difficult to secure the requested wide range of frequency spectrum for one of the up-link and down-link channels.

In addition, since there are some restrictions on the transmitter etc. and the frequency bands used in the conventional wireless access system, it is difficult to realize a cost effective wireless access system.

For example, if a sub-millimeter/millimeter wavelength frequency spectrum (hereinafter referred to as "sub-millimeter/millimeter waveband") is used for the wireless access system, the cost of the transmitters rises sharply. Thus, it is difficult to realize a high-speed transmission by using a wireless access system in a microwave range, which generally affords low-cost wireless transmitter/receiver units, as well as a wide frequency band system, which can be integrated in a network system.

In GB-A-2 330 729, a communication system comprising at least one central and a number of remote units and employing a shared frequency band by using different transmission schemes for uplink and downlink is disclosed. The different transmission schemes are used in the two directions for reducing the cross interference between remote units uplinking and remote units downlinking in a shared spectrum. The different transmission schemes are characterized by one (CDMA) having the signal energy spread, in preferably both the time and frequency domain whereas the other (TDMA, DFDMA) transmission scheme is characterized by having signal energy concentrated in both the frequency and time domain.

In EP-A-0 999 717, a broadband wireless mesh topology network designed for packet data transmission in the high frequency bands of the spectrum is disclosed. Ways of implementing a broadband wireless network based on mesh topology, optimized for delivery of data, are shown. Each node in the wireless network has a MAC layer that enables the routing and insertion of packetized data between multiple network nodes and between the nodes and external LAN or WAN data networks. An optimized algorithm for automatic node admission to the network and dropping off the network as well as an algorithm for maintaining multiple routes for route diversity are presented.

In US 5,479,408, a wireless personal paging, communications, and locating system is disclosed. Data is sent via radio to a communications unit carried by the individual and displayed visually together with possible responses. Each unit transmits its identity and responses via coded infrared light to one or more remote stations. A remote station relays data to a central station also via radio, which tracks the location of units and delivers messages. The hybrid radio-infrared light approach combines the broad, reliable characteristics of radio communication with the ability of infrared light to allow each unit to be located. The use of radio for communication from the remote station to the central station allows the system to be completely wireless, thus simplifying and reducing the cost of installation.

### SUMMARY OF THE INVENTION

It is an object of the present invention to provide a point-to multipoint wireless access system which allows to transmit large capacity data packet groups requested by a base station from user servers to said base station.

The present invention provides a point-to multipoint wireless access system as defined in independed claim 1.

In accordance with an aspect of the point-to-multipoint wireless access system, by separating the second wireless band for the up-link channels from the first wireless band for the down-link channels, the larger capacity data is transferred through one of the up-link and down-link channels by the higher frequency band, whereas the smaller capacity data is transferred through the other of the up-link and down link channels by the lower frequency band. This achieves a lower cost wireless subscriber's terminal which transmits smaller capacity data and receives larger capacity data.

The above and other objects, features and advantages of the present invention will be more apparent from the following description, referring to the accompanying drawings.

### BRIEF DESCRIPTION OF THE DRAWINGS

Fig. 1 is a block diagram of a point-to-multipoint wireless access system according to a first example useful for understanding but not claimed by the present invention.
Fig. 2 is a block diagram of a point-to-multipoint wireless access system according to a second example useful for understanding but not claimed by the present invention.
Fig. 3 is a block diagram of a point-to-multipoint wireless access system according to still a third example useful for understanding but not claimed by the present invention.
Fig. 4 is block diagram of a point-to-multipoint wireless access system according to a first embodiment of the present invention.

### PREFERRED EMBODIMENT OF THE INVENTION

The present invention provides a point-to-multipoint wireless access system that can be used in the case where the usable frequency band is narrow so that a broadband transmission is not suited or where a low-cost, high-speed transmission is desired.

More specifically, the point-to-multipoint wireless access system according to a preferred embodiment of the present invention has a combination of:
an optical communication band and a wireless communication band, in a down-link channel, i.e., a channel from a wireless base station to a wireless subscriber's terminal, and an up-link channel, i.e., a channel from a wireless subscriber's terminal to a wireless base station.

In the first embodiment, the point-to-multipoint wireless communication system of the present invention uses a combination of two different frequency bands including a waveband such as 26GHz, 28GHz, 38GHz and 42GHz bands, and an optical communication band.

In a wireless access system according to the examples, the down-link channels for the subscriber's terminals use a frequency band corresponding to a sub-millimeter waveband or a millimeter waveband, such as 26-GHz, 28-GHz, 38-GHz or 42-GHz band, and the up-link channels for the subscriber's terminals use a 2.4-GHz ISM band; the down-link channels use a 5.3-GHz frequency band and the up-link channels use a 2.4-GHz ISM band; the down-link channels use a 60 GHz frequency band and the up-link channels use a 5-GHz frequency band. In a wireless system according to the first embodiment, the channels use the down-link waveband such as 26-GHz, 28-GHz, 38-GHz and 42-GHz frequency bands, and the up-link channels use an optical wave.

In the above configuration, the higher-frequency band is used for the channel transmitting larger capacity data, whereas the lower-frequency band is used for the channel transmitting smaller capacity data. By using the above frequency bands in both the up-link and down-link channels, a low-cost, high-speed point-to-multipoint wireless communication system can be realized.

Now, the present invention is more specifically described with reference to accompanying drawings, wherein similar constituent elements are designated by similar reference numerals.

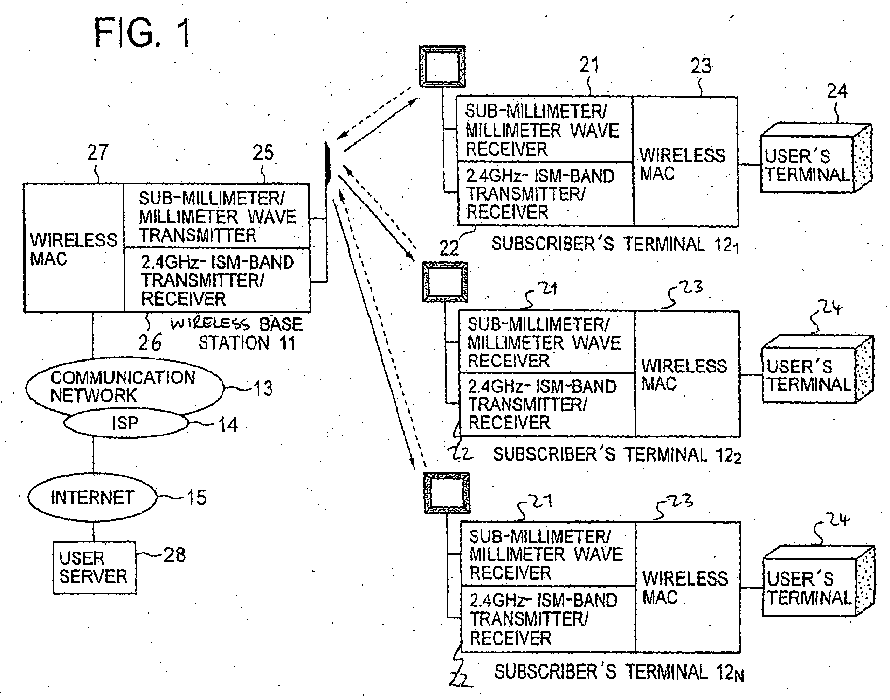

Referring to Fig. 1, a wireless access system according to the first example is such that the down-link channel from the wireless base station to the subscriber's terminal uses a frequency band corresponding to a sub-millimiter waveband or a millimiter waveband, such as 26-GHZ, 28-GHz, 38-GHz, and 42-GHz frequency band, and the up-link channel from the subscriber's terminal to the wireless base station uses an 2.4-GHz ISM band that does not need a license from the authority. The wireless access system of the present example is used as a point-to-multipoint access system which transmits large capacity data through the down-link channel and transmits small capacity data through the up-link channel. The wireless access system of the present embodiment can be constructed at a lower cost, and effectively operate at a high speed.

More specifically, the wireless access system of Fig. 1 includes a wireless base station 11 connected to a communication network or backbone network 13, a plurality of user's terminals 24, and a plurality of wireless subscriber's terminals 12₁ to 12_{N} to which the respective user's terminals 24 are connected through the user's Ethernet. The user's terminal may be a personal computer.

The down-link channel from the wireless base station 11 to each of the wireless subscriber's terminals 12₁ to 12_{N} is connected through a wireless communication system using a wireless frequency band corresponding to a sub-millimeter waveband or millimeter waveband, such as 26-GHz, 28-GHz, 38-GHz, and 42-GHz frequency bands. The up-link channel from each of the wireless subscriber's terminal 12₁ to 12_{N} to the wireless base station 11 is connected through a wireless communication system using a 2.4-GHz ISM band. The communication network 13 is connected through an internet service provider (ISP) 14 to the Internet 15, to which a user server 28, such as a content server, having a function for responding to a variety of user's requests is connected.

The wireless base station 11 includes a millimeter/sub-millimeter wave transmitter unit 25 for transmitting a sub-millimeter wave or millimeter wave through the down-link channel, a transmitter/receiver unit 26 for receiving a 2.4-GHz ISM band (or receiver unit 26 for receiving a 2.4-GHz frequency band), and a wireless media access control (MAC) unit 27.

In the wireless base station 11, the sub-millimeter/millimeter wave transmitter unit 25 includes an antenna, a power amplifier, and an up-link converter. The 2.4-GHz transmitter/receiver unit 26 includes an antenna, a LNA, a down-link converter, a power amplifier and a down-link converter (The receiver unit 26 includes an antenna, a LNA and a down-link converter). The MAC unit 27 includes a baseband modem between the same and the communication network 13, and has a two-band wireless system conversion function for the data between the communication network 13 and the transmitter/receivers etc., and a function for preventing a data collision on the bus cable between the data which a plurality of terminals transmitted.

Each of the subscriber's terminals 12₁ to 12_{N} includes a 2.4-GHz transmitter/receiver unit or a 2.4-GHz-ISM-band transmitter unit 22 for transmitting data through the down-link channel, a receiver unit 21 for receiving data of sub-millimeter wave or a millimeter wave through the up-link channel, and a wireless MAC unit 23.

In each wireless subscriber's terminal 12, the 2.4-GHz-ISM-band transmitter/receiver unit 22 includes an antenna, a LNA, a down-link converter, a power amplifier, an up-link converter etc., whereas the 2.4-GHz transmitter unit 22 includes an antenna, a LNA, a down-link converter etc. The wireless MAC unit 23 includes a baseband modem between the same and the user's terminal 24, and has a two-band wireless system conversion function for converting data between the Ethernet and the transmitter/receiver unit etc.

Operation of the wireless access system of Fig. 1 will be described with reference to an example wherein a user's terminal 24 accesses the user server 28 on the internet.

First, the user's terminal 24 transmits a request packet to the Ethernet for requesting the user server 28 of transmission of desired data.

The request packet is fed to the wireless subscriber's terminal 12 through the user's having different frequency allocation.

The request packet fed to the wireless subscriber's terminal 12 is converted by the wireless MAC unit 23 into the frame format of the 2.4-GHz wireless link, subjected to modulation and frequency conversion, and then transmitted through the 2.4-GHz transmitter unit 22.

The request packet transmitted from the 2.4-GHz transmitter unit 22 is received by the 2.4-GHz receiver unit 26 in the wireless base station 11, subjected to frequency conversion and demodulation to be restored to the original request packet in the wireless MAC unit 27.

If the 2.4-GHz wireless link constitutes a system that requires acknowledge (ACK) signal, the ACK signal is returned to the wireless subscriber's terminal 12 through the 2.4-GHz wireless link.

The request packet restored in the wireless base station 11 is fed through the communication network 13 or a backbone network 13 connected to the wireless base station 11 to the ISP server and then the router of the ISP14, and transmitted to the Internet 15.

The user server 28 targeted on the Internet 15 receives the request packet from the Internet 15, and returns a response packet group.

The response packet group transmitted from the user server 28 arrives at the wireless base station 11 through the Internet 15, the ISP14 and the communication network 13.

The response packet group fed to the wireless base station 11 is converted by the wireless MAC unit 27 into the frame format of the sub-millimeter/millimeter waveband wireless link, subjected to modulation and frequency conversion to be fed to the sub-millimeter/millimeter waveband transmitter unit 25.

The response packet group fed through the sub-millimeter/millimeter waveband transmitter unit 25 is received by the sub-millimeter/millimeter waveband receiver 21 of the wireless subscriber's terminal 12, subjected to frequency conversion and demodulation to be restored to the original response packet group in the wireless MAC unit 23.

The response packet group thus restored to the original packet group is fed to the user's terminal 24 through the user's Ethernet.

The request packet transmitted from the user's terminal 24 through the up-link channel has a smaller data size, whereas the response packet group transmitted from the user server 28 through the down-link channel has a larger data size. In the above embodiment, by using a 2.4-GHz ISM band through the up-link channel while a sub-millimeter or millimeter waveband through the down-link channel, saving the transmitter cost for the up-link channel to achieve a low-cost user's terminal. The 2.4-GHz ISM band is a non-licensed waveband, whereby a single license only on the down-link channel can be sufficient for the service operation, saving the running cost for the service.

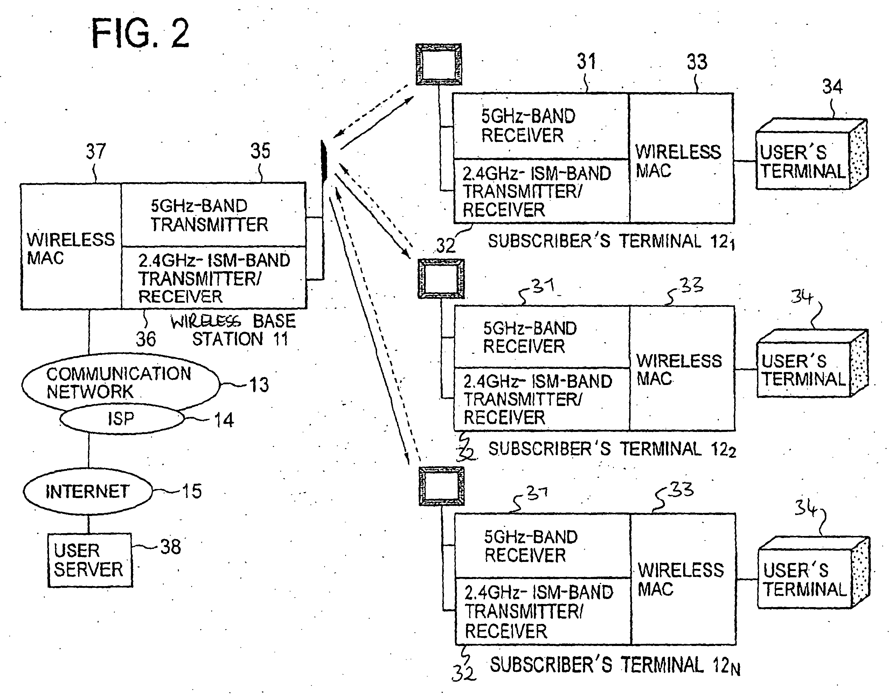

Referring to Fig. 2, a wireless access system according to the second example is such that the down-link channel from the wireless base station 11 to the subscriber's terminal 12₁, ··· 12_{N} uses a 5-GHz frequency band, and the up-link channel from the subscriber's terminal 12₁, ··· 12_{N} to the wireless base station 11 uses a 2.4-GHz ISM band. The wireless access system is used as a point-to-multipoint access system which can be used for building a low-cost, high-speed Internet system, as in the case of the first example. The constituent elements in the system of the present example, such as amplifiers and transmitter/receiver units, are similar to those of the first example.

The wireless access system of Fig. 2 includes a wireless base station 11 connected to a communication network 13, a plurality of user's terminals 34, and a plurality of wireless subscriber's terminals 12₁ to 12_{N} to which the respective user's terminals 34 are connected through the user's Ethernet.

The wireless base station 11 includes a 5.3-GHz transmitter unit 35 having an antenna, a power amplifier and an up-link converter, a 2.4-GHz-ISM-band transmitter/receiver unit 36 having an antenna, a LNA, a down-link converter, a power amplifier and an up-link converter, and a wireless MAC unit 37 having a two-band wireless system conversion function for converting the data between the Ethernet and the transmitter/receiver unit etc.

Each of the wireless subscriber's terminals 12₁ to 12_{N} includes a 2.4-GHz-ISM-band transmitter/receiver unit 32 having an antenna, a LNA, a down-link converter, a power amplifier and an up-link converter (or a 2.4-GHz-ISM-band transmitter unit 32 having an antenna, a LNA and a down-link converter), a receiver unit 31 having an antenna, a LNA and a down-link converter, and a wireless MAC unit 33 having a baseband modem between the same and the user's terminal 34. The wireless MAC unit 33 has a two-band wireless system conversion function.

Operation of the wireless access system of Fig. 2 will be described with reference to an example in which the user's terminal 34 accesses the user server 38 on the Internet.

First, the user's terminal 34 transmits a request packet to the Ethernet for requesting the user server 38 of transmission of desired data.

The request packet is fed to the wireless subscriber's terminal 12 through the user Ethernet.

The request packet fed to the wireless subscriber's terminal 12 is converted by the wireless MAC unit 33 into the frame format of the 2.4-GHz-ISM-band wireless link, subjected to modulation and frequency conversion, and then transmitted to the 2.4-GHz-ISM-band transmitter unit 32.

The request packet transmitted from the 2.4-GHz-ISM-band transmitter unit 32 is received by the 2.4GHz-ISM-band receiver 36 in the wireless base station 11, subjected to frequency conversion and demodulation to be restored to the original request packet in the wireless MAC unit 37.

If the 2.4-GHz wireless link requires an acknowledge (ACK) signal, the ACK signal is returned to the wireless subscriber's terminal 12 through the 2.4-GHz wireless link.

The request packet restored in the wireless base station 11 is fed through the communication network 13 connected to the wireless base station 11 to the ISP server and then the router of the ISP14, and transmitted to the Internet 15.

The user server 38 targeted on the Internet 15 receives the request packet from the Internet 15, and returns a response packet group.

The response packet group transmitted from the user server 38 arrive at the wireless base station 11 through the Internet 15, the ISP 14, and the communication network 13.

The response packet group fed to the wireless base station 11 is converted by the wireless MAC unit 37 into the frame format of the 5-GHz wireless link, subjected to modulation and frequency conversion to be fed to the 5-GHz transmitter unit 35.

The response packet group fed through the 5-GHz transmitter unit 35 is received by the 5-GHz receiver unit 31 of the wireless subscriber's terminal 12, subjected to frequency conversion and demodulation to be restored to the original response packet group in the wireless MAC unit 33.

The response packet group thus restored to the original packet group is fed to the user's terminal 34 through the user's Ethernet.

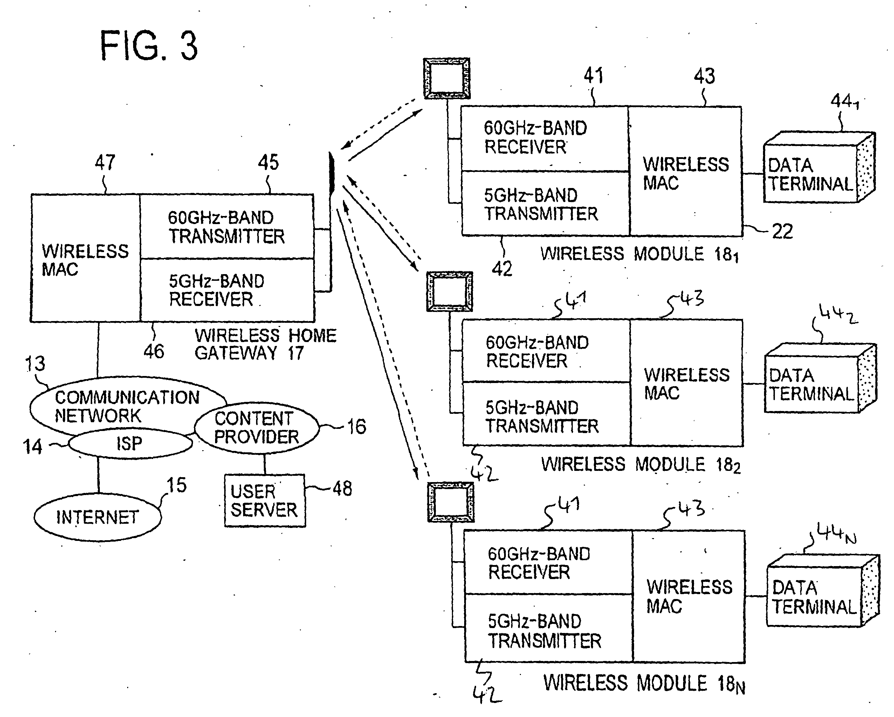

Referring to Fig. 3, a wireless access system according to the third example is such that the down-link channel from a wireless home gateway 17 to each of data terminals 44₁, ··· 44_{N} uses a 60-GHz frequency band, and the up-link channel from the data terminal 44₁, ··· 44_{N} to the home gateway 17 uses a 5-GHz frequency band dedicated to a home use. In the present example, the wireless base station in the previous example is replaced by the wireless home gateway 17, and the wireless subscriber's terminal is replaced by a wireless module 18. The user server 48 is installed in a content provider 16. The data terminal may be a portable data assistant.

The wireless home gateway 17 in the present embodiment includes a 60-GHz transmitter unit 45 having an antenna, a power amplifier, and an up-link converter, a 5-GHz band receiver unit 46 having an antenna, a LNA and a down-link converter, and a wireless MAC unit 43 having a baseband modem unit between the same and the data terminal 44. The MAC unit 43 has a two-band wireless system conversion function for the data between the Ethernet and the transmitter units etc.

Each of the wireless modules 18₁, ··· 18_{N} includes a 5-GHz transmitter unit 42 having an antenna, a LNA and a down-link converter, a 60-GHz receiver unit 41 having an antenna, a LNA and a down-link converter, and a wireless MAC unit 43 having a baseband modem between the same and the data terminal 44. The wireless MAC unit 43 has a two-band wireless system conversion function between the Ethernet and the transmitter etc.

Operation of the wireless access system of Fig. 3 will be described with reference to an example in which the data terminal 44 accesses the user server 48 to request the same of transferring a large-capacity file such as an on-demand image data file or a game software.

First, the data terminal 44 transmits a request packet.

The request packet is fed to the wireless module 18 installed in or attached to the data terminal 44.

The request packet fed to the wireless module 18 is converted by the wireless MAC unit 43 into the frame format of the 5-GHz wireless link, subjected to modulation and frequency conversion, and then transmitted to the 5-GHz transmitter unit 42.

The request packet transmitted from the 5-GHz transmitter unit 42 is received by the 5-GHz receiver 46 in the wireless home gateway 17, subjected to frequency conversion and demodulation to be restored to the original request packet in the wireless MAC unit 47.

The request packet restored in the wireless home gateway 17 is fed through a high-speed access network and a communication network 13 connected to wireless home gateway 17 to the user server 48 in the content provider 16.

The user server 48 in the content provider 16 receives the request packet, and returns a response packet group.

The response packet group arrives at the wireless home gateway 17, which transmitted the request packet, through the high-speed access network and the communication network 13.

The response packet group fed to the wireless home gateway 17 is converted by the wireless MAC unit 47 into the frame format of the 60-GHz-band wireless link, subjected to modulation and frequency conversion to be fed to the 60-GHz-band transmitter unit 45.

The response packet group fed through the 60-GHz-band transmitter unit 45 is received by the 60-GHz-band receiver unit 41 installed in or attached to the data terminal 44₁, subjected to frequency conversion and demodulation to be restored to the original response packet group in the wireless MAC unit 43.

The response packet group thus restored to the original packet group is fed to the data terminal 44 for storage and display thereof.

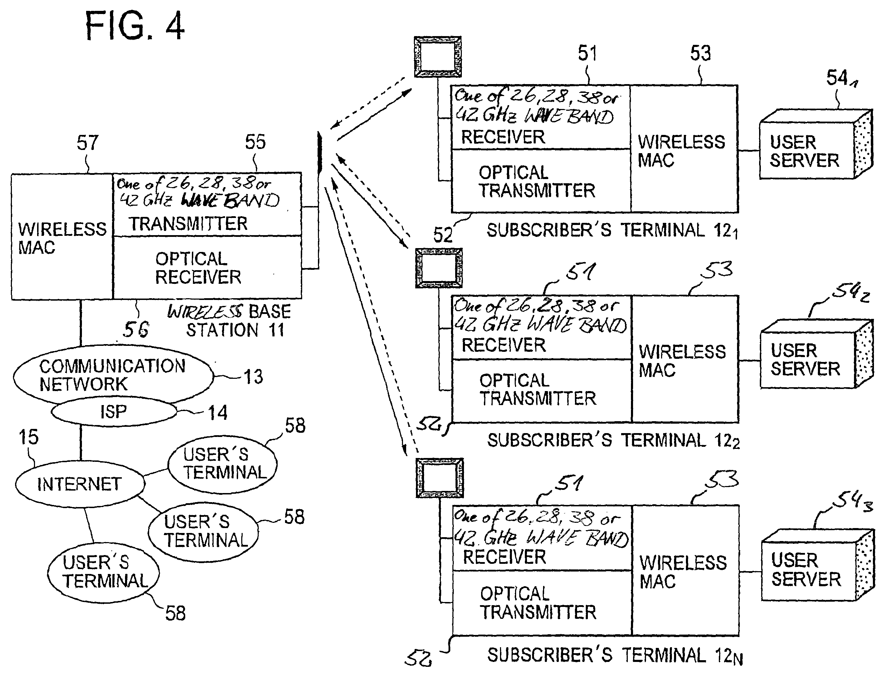

Referring to Fig. 4, a wireless access system according to the first embodiment of the present invention is such that the down-link channel from the wireless base station 11 to each of the wireless subscriber's terminals 12₁, ··· 12_{N} uses a 26-GHz or 2.4-GHz wireless frequency band, and the up-link channel from each of the subscriber's terminals 12₁, ··· 12_{N} to the wireless base station 11 uses an optical communication system, for achieving a higher efficient point-to-multipoint wireless communication system. In the present embodiment, the user's terminal 58 requests the user server 54 of transmitting a response packet to the user's terminal 58.

The wireless base station 11 includes an optical receiver 56 having a lens system, an optical sensor, and a down-link converter, a transmitter unit 55 having an antenna, a power amplifier, and an up-link converter, and a wireless MAC 57 having a baseband modem between the same and the communication network 13. The wireless MAC 57 has a two-band wireless system conversion function between the communication network 13 or the internet 15 and the transmitter etc.

Each of the wireless subscriber's terminals 12₁ to 12_{N} includes a receiver unit 51 having an antenna, a LNA and a down-link convener, an optical transmitter 52 having a lens system, a light emitting device, and an up-link converter, and a wireless MAC unit 53 having a baseband modem between the same and a user server 54. The wireless MAC unit 53 has a two-band wireless system conversion function between a G-bit Ethernet and the optical transmitter etc.

Operation of the wireless access system of Fig. 4 will be described with reference to an example in which the user's terminal accesses one of the user servers 54₁ to 54_{N} through the internet 15 to receive a response packet group from the one of the user servers 54₁ to 54_{N}.

First, the user's terminal 58 transmits a request packet through the internet 15.

The request packet is fed to the wireless base station 11 through the internet 15 and the communication network 13.

The request packet fed to the wireless base station 11 is converted by the wireless MAC unit 57 into the frame format of the wireless-frequency-band wireless link, subjected to modulation and frequency conversion, and then transmitted to the wave transmitter unit 55.

The request packet transmitted from the wave transmitter unit 55 is received by the wave receiver unit 51 in the wireless subscriber's terminal 12, subjected to frequency conversion and demodulation to be restored to the original request packet in the wireless MAC unit 53.

The request packet restored in the wireless subscriber's terminal 12 is fed through the LAN in the subscriber to the user server 54 such as a web server or a content server.

The user server 54 targeted receives the request packet, and returns a response packet group.

The response packet group transmitted from the user server 54 arrives at the wireless subscriber's terminal 12 through the LAN in the subscriber.

The response packet group fed to the wireless subscriber's terminal 12 is converted by the wireless MAC unit 53 into the frame format of the optical wireless link, subjected to modulation to be fed to the light emitting device in the optical transmitter unit 52.

The response packet group fed from the optical transmitter unit 52 is received by the wide-angle optical sensor of the optical receiver 56 in the wireless base station 11, subjected to optical-to-electric conversion and demodulation to be restored to the original response packet group in the wireless MAC unit 57.

The response packet group thus restored to the original packet group is fed to the user's terminal 58 through the internet 15 and the communication network 13.

The above embodiment may be modified by using a known technique. For example, the transmitter/receiver unit may be combined with a cellular telephone system such as PHS, GSM, CDMA-One, GRPS, W-CDMA, CDMA2000, and UMTS.

In addition, the up-link channel and the down-link channel may be reversed in their frequencies and the transmitter/receiver units. Further, both the up-link channel and the down-link channel may use different non-licensed frequencies. Further, the combination of U-NII band and ISM band of the FCC in the USA having different frequency allocation and no need to obtain a license may be combined in the present invention for the up-link channel and the down-link channel.

In the above examples, the combination of different frequencies assures a sufficient number of frequency bands to be obtained in either the up-link channels or the down-link channels. In particular, it is preferable that the down-link channel, such as used for passing a large-capacity data file due to the asymmetry of the traffic, use a sub-millimeter wave or millimeter wave because such a wave has a sufficient bandwidth. In this case, the up-link channel may use 2.4-GHz ISM band which does not need a license. The use of the ISM band which is exempt of the license can reduce the running costs for the access system.

A wide-band service can be obtained with a relatively low cost by combining different wireless bands such as including a 5-GHz-band which is allowed for outdoor use and a 2.4-GHz ISM band which is limited to an indoor use to obtain a sufficient number of channels. In addition, the combination of such different wireless bands simplifies the structure of the duplexer in the user's terminal.

The wireless block installed in a module of the data terminal, as used in the second example, can be fabricated at a lower cost due to a lower transmission frequency of the wireless block as low as 5 GHz.

The optical communication link, if used in the up-link channel with the down-link channel using a wireless link, realizes a large capacity point-to-multipoint asymmetric system.

## Claims

1. A point-to-multipoint wireless access system comprising a wireless base station (11), a plurality of wireless subscriber's terminals (12), a plurality of down-link channels for transmitting data from said wireless base station (11) to respective of said wireless subscriber's terminals (12), and a plurality of up-link channels for transmitting data from respective of said wireless subscriber's terminals (12) to said wireless base station (11), **characterized in that**:
said down-link channels use a first wireless band and said up-link channels use an optical communication link;
said first wireless band is one of 26-GHz, 28-GHz, 38-GHz and 42-GHz frequency bands;
each of said wireless subscriber's terminals (12) is connected to a user server (54) via a baseband modem;
each of said wireless subscriber's terminals comprises a MAC unit (53) having a conversion function between said baseband modem and said optical communication link converting a response packet group returned by said user server on request of said wireless base station into a frame format of said optical communication link for transmitting said response packet group to said base station.

2. The point-to-multipoint wireless access system as defined in claim 1, wherein said wireless base station (11) is connected to the internet (15) through a communication network (13), at least one of said wireless subscriber's terminals (12) is connected to a user server (54) through an Ethernet.

3. The point-to-multipoint wireless access system as defined in one of the claims 1 to 2, wherein said wireless base station (11) is a wireless home gateway (17) having a gateway function, and each of said subscriber's terminals is a wireless module (18) connected to a data terminal (44).

## Patentansprüche

1. Drahtloses Punkt-zu-Mehrpunkt-Zugriffssystem mit einer drahtlosen Basisstation (11), einer Vielzahl von drahtlosen Teilnehmeranschlüssen (12), einer Vielzahl von Abwärtsverbindungskanälen zum Übertragen von Daten von der drahtlosen Basisstation (11) zu jeweiligen der drahtlosen Teilnehmeranschlüsse (12) und einer Vielzahl von Aufwärtsverbindungskanälen zum Übertragen von Daten von jeweiligen der drahtlosen Teilnehmeranschlüsse (12) zur drahtlosen Basisstation (11), **dadurch gekennzeichnet, dass**
die Abwärtsverbindungskanäle ein erstes drahtloses Band verwenden und die Aufwärtsverbindungskanäle eine optische Kommunikationsverbindung verwenden;
das erste drahtlose Band eines von 26-GHz-, 28-GHz-, 38-GHz- und 42-GHz-Frequenzbändern ist;
jeder der drahtlosen Teilnehmeranschlüsse (12) über ein Basisbandmodem mit einem Anwenderserver (54) verbunden ist;
jeder der drahtlosen Teilnehmeranschlüsse eine MAC-Einheit (53) mit einer Umwandlungsfunktion zwischen dem Basisbandmodem und der optischen Kommunikationsverbindung aufweist, die eine auf eine Anforderung von der drahtlosen Basisstation hin durch den Anwenderserver zurückgegebene Antwort-Paketgruppe in ein Frameformat der optischen Kommunikationsverbindung umwandelt, um die Antwort-Paketgruppe zur Basisstation zu übertragen.

2. Drahtloses Punkt-zu-Mehrpunkt-Zugriffssystem nach Anspruch 1, wobei die drahtlose Basisstation (11) über ein Kommunikationsnetzwerk (13) mit dem Internet (15) verbunden ist, wobei wenigstens einer der drahtlosen Teilnehmeranschlüsse (12) über ein Ethernet mit einem Anwenderserver (54) verbunden ist.

3. Drahtloses Punkt-zu-Mehrpunt-Zugriffssystem nach einem der Ansprüche 1 bis 2, wobei die drahtlose Basisstation (11) ein drahtloser Heim-Gateway (17) mit einer Gateway-Funktion ist und jeder der Teilnehmeranschlüsse ein an einem Datenendgerät (44) angeschlossenes drahtloses Modul (18) ist.

## Revendications

1. Système d'accès sans fil point à multipoint comprenant une station de base sans fil (11), une pluralité de terminaux d'abonnés, sans fil (12), une pluralité de canaux de liaison descendante pour transmettre des données de ladite station de base sans fil (11) aux terminaux respectifs desdits terminaux d'abonnés sans fil (12), et une pluralité de canaux de liaison montante pour transmettre des données des terminaux respectifs desdits terminaux d'abonnés sans fil (12) à ladite station de base sans fil (11), **caractérisé en ce que** :
lesdits canaux de liaison descendante utilisent une première bande sans fil et lesdits canaux de liaison montante utilisent une liaison de communication optique ;
ladite première bande sans fil est une des bandes de fréquences de 26-GHz, 28-GHz, 38-GHz et 42-GHz ;
chacun desdits terminaux d'abonnés sans fil (12) est connecté à un serveur utilisateur (54) via un modem en bande de base ;
chacun desdits terminaux d'abonnés sans fil comprend une unité MAC (53) ayant une fonction de conversion entre ledit modem en bande de base et ladite liaison de communication optique convertissant un groupe de paquets de réponses renvoyé par ledit serveur utilisateur à la demande de ladite station de base sans fil en un format de trame de ladite liaison de communication optique pour transmettre ledit groupe de paquets de réponses à ladite station de base.

2. Système d'accès sans fil point à multipoint selon la revendication 1, dans lequel ladite station de base sans fil (11) est connectée à Internet (15) par l'intermédiaire d'un réseau de communication (13), au moins un desdits terminaux d'abonnés sans fil (12) est connecté à un serveur utilisateur (54) par l'intermédiaire d'un Ethernet.

3. Système d'accès sans fil point à multipoint selon l'une des revendications 1 à 2, dans lequel ladite station de base sans fil (11) est une passerelle domestique sans fil (17) ayant une fonction de passerelle, et chacun desdits terminaux d'abonnés est un module sans fil (18) connecté à un terminal de données (44).
